# EUROPÄISCHE PATENTSCHRIFT

(11) **EP 1 925 216 B1**
(45) Veröffentlichungstag und Bekanntmachung des Hinweises auf die Patenterteilung: **17.03.2010**
(21) Anmeldenummer: 06023905.0
(22) Anmeldetag: 17.11.2006
(51) Int. Cl.: A23L 1/40

(54) **Granuläres Nahrungsmittelkonzentrat**
Aliment concentré granulaire
Granular food concentrate

(43) Veröffentlichungstag der Anmeldung: 28.05.2008
(73) Patentinhaber: Hügli Holding AG, 9323 Steinach (CH)
(72) Erfinder: Scharf, Karl, 74223 Flein (DE); Gotzmann, Albert, 78256 Steisslingen (DE)
(74) Vertreter: Geyer, Fehners & Partner

(56) Entgegenhaltungen:
- EP-A- 1 074 188
- EP-A1- 0 981 970
- EP-A2- 0 954 985
- WO-A-98/20756
- WO-A-2006/087090
- GB-A- 1 142 151
- US-A- 4 557 938

## Beschreibung

Die Erfindung bezieht sich auf ein granuläres Nahrungsmittelkonzentrat, ein Verfahren zu dessen Herstellung und dessen Verwendung zur Herstellung eines Nahrungsmittelprodukts, insbesondere einer gebundenen Suppe oder einer Sauce.

Nahrungsmittelszusammensetzungen zur Herstellung von Suppen, Saucen und Fixprodukten werden dem Verbraucher in der Regel in Form von Pulvern oder Granulaten zur Verfügung gestellt, um eine leichte Dosierbarkeit und Handhabbarkeit sicherzustellen. Pulver bestehen in der Regel aus Partikeln, die deutlich kleiner als 1 mm sind. Diese haben jedoch den Nachteil, daß dann, wenn sie zur Verklumpung neigen, in der Regel große Mengen an Trennmitteln zugesetzt werden müssen. Daher haben sich Nahrungsmittelkonzentrate in Granulatform bewährt, die einen größeren Partikeldurchmesser aufweisen.

WO 2006/087090 offenbart Granulate aus mikroporösen Partikeln enthaltend ein micronisiertes Lipid Pulver, die zur Herstellung von Konzentraten für Suppen und Saucen mit 0.5-60% Fett verwendet werden kann.

GB 1142151 offenbart eine Nahrungsmittel Trockenmischung, die Instant Eigenschaften aufweist und klumpenfrei zu einer Suppe oder Sauce rekonstruiert werden kann.

Üblicherweise werden Granulate über eine Partikelvergrößerung entweder durch Agglomeration oder Granulation hergestellt. Eine Agglomeration in diesem Sinne ist die Aufbauagglomeration, bei der ein Pulver in einem Fließbett mittels Aufsprühen von Fluiden, beispielsweise Wasser, wäßrigen Systemen, Dispersionen, Fett oder Öl als Haftvermittler eine Kornvergrößerung erfährt. Dies geschieht durch Verbinden der einzelnen Pulverpartikel, wobei sich in der Regel Feststoffbrücken ausbilden. Die Flüssigkeit löst entweder die Partikel des Pulvers selbst an oder sie liefert bereits gelöste Stoffe mit, beispielsweise Kohlenhydrate, wodurch die einzelnen Partikel aneinander haften können. Die Feststoffbrücken werden in einem sich anschließenden Trocknungsschritt ausgebildet. Dies geschieht in der Regel in mehreren Schritten, da die gebildeten Partikel immer erst neu stabilisiert werden müssen. Diese Vielstufigkeit der Aufbauagglomeration ist ein wesentlicher Verfahrensnachteil. Ferner ist in der Regel die erreichbare Partikelgröße begrenzt, da die Partikel aufgrund der mechanischen Belastung ab einer bestimmten Größe instabil werden und wieder auseinander brechen. Darüber hinaus sind Agglomerationsverfahren auch hinsichtlich der erhältlichen Form der Agglomerate begrenzt, da Agglomerate eine offene Struktur aufweisen, die auch als Brombeer-Form bezeichnet wird. Eine kompakte Form ist daher mit Hilfe der Agglomeration nicht zu erreichen.

Wenn als Fluide Öle oder niederschmelzende Fette eingesetzt werden, entstehen bei der Agglomeration keine sonderlich stabilen Teilchen, da durch die instabile Haftung nur eine gewisse Anzahl an Pulverpartikeln zusammen bleibt. Unter niederschmelzenden Fetten werden in der Regel Fette verstanden, die unterhalb der Körpertemperatur des Menschen schmelzen. Daher ist die Herstellung größerer Agglomerate nicht möglich. Bei der Verwendung von geschmolzenem Fett sind auch stabilere und damit größere Agglomerate herstellbar, hier besteht jedoch der Nachteil, daß die Verfahrensführung aufwendig wird, um mit dem geschmolzenen Fett arbeiten zu können. Auf Kohlenhydraten basierende Feststoffbrücken zwischen den Pulverpartikeln sind in der Regel stabiler.

Im Unterschied dazu werden beim Granulieren, das in diesem Zusammenhang auch als Formgranulieren oder Extrudieren bezeichnet wird, die größeren Partikel des Granulats durch Extrudieren aus einem Pulver hergestellt.

Jedes dieser Verfahren hat seine Grenzen, wodurch nur bestimmte Produktgruppen durch das jeweilige Verfahren hergestellt werden können. Die Unterschiede liegen unter anderem in der Stabilität der erhältlichen Teilchen und dem einsetzbaren fluiden Haftvermittler.

Wenn mit Hilfe der Formgranulation ein granuläres Nahrungsmittelkonzentrat erzeugt werden soll, werden in der Regel lipide Haftvermittler eingesetzt, beispielsweise Fett oder Öl. Diese lipiden Substanzen fungieren in der Endanwendung, z.B. beim Einrühren des granulären Nahrungsmittelkonzentrats in kochendes Wasser, als Trennmittel für die Partikel, wodurch die Ausbildung der Viskosität verzögert wird und dadurch eine Klumpenbildung verhindert wird. Ein Granulierverfahren unter Zusatz von Öl als Haftvermittler ist in der WO 03/000076 A1 beschrieben.

Die Formgranulation unter Einsatz eines wäßrigen Haftvermittlers hat wiederum den Nachteil, daß zur Formstabilisierung eine starke Verdichtung erforderlich wäre, wodurch das granuläre Nahrungsmittelkonzentrat nicht mehr ausreichend rehydratisierbar ist, d.h. es kommt zur Klumpenbildung und es wird keine ausreichende Viskosität im gewünschten Endprodukt erzeugt. Für ein fettarmes Nahrungsmittelkonzentrat eignet sich die Formgranulation wegen des erforderlichen lipiden Haftvermittlers daher nicht. Des weiteren quellen stärkehaltige Produkte durch das zugesetzte Wasser auf und gequollene Stärke wird durch die mechanische Belastung bei der Formgranulation zumindest teilweise zerstört.

Die Herstellung eines fettarmen granulären Nahrungsmittelkonzentrats durch Agglomeration bringt wiederum die Schwierigkeit mit sich, daß die Größe der erhältlichen Granulatteilchen (Agglomerate) kaum zu steuern ist, insbesondere wenn das Nahrungsmittelkonzentrat einen höheren Anteil an hygroskopischen Komponenten enthält, beispielsweise Hefeextrakt, so daß statt eines Granulats mit einer engen Größenverteilung große Klumpen resultieren können.

Aus diesen Gründen sind granuläre Nahrungsmittelkonzentrate zur Herstellung von Nahrungsmittelprodukten, die ein Bindemittel zur Ausbildung von Viskosität enthalten, nur in fettreicher Form verfügbar.

Aufgabe der vorliegenden Erfindung ist daher die Bereitstellung eines ein Bindemittel enthaltenden Nahrungsmittelkonzentrats, das fettarm ist und Instanteigenschaften aufweist, d.h. gut rehydratisierbar ist und so schnell und einfach in ein klumpenfreies Nahrungsmittelprodukt überführt werden kann.

Diese Aufgabe wird durch ein granuläres Nahrungsmittelkonzentrat gelöst, das ein Bindemittel enthält, weniger als 1 Gew.-% Fett umfaßt und mehr als 60 Gew.-% Granulatteilchen enthält, die eine Größe von mindestens 1 mm aufweisen, wobei das granuläre Nahrungsmittelkonzentrat schüttbar ist und eine Schüttdichte von 300 - 550 g/l aufweist.

Das granuläre Nahrungsmittelkonzentrat der Erfindung ist überraschenderweise gut rehydratisierbar, d.h. es bildet beim Mischen mit Wasser besonders schnell ein im wesentlichen klumpenfreies, viskoses Nahrungsmittelprodukt, insbesondere eine gebundene Suppe oder eine Sauce.

Das erfindungsgemäße Nahrungsmittelkonzentrat enthält ein Bindemittel, das nach der Rehydratisierung im hergestellten Nahrungsmittelprodukt die gewünschte Viskosität erzeugt. Das erfindungsgemäße Nahrungsmittelkonzentrat enthält bevorzugt 1 - 98 Gew.-% Bindemittel, bezogen auf die Gesamtzusammensetzung, besonders bevorzugt 3 - 95 Gew.-% Bindemittel und noch weiter bevorzugt 5 - 90 Gew.-% Bindemittel. Weiter bevorzugt enthält das erfindungsgemäße Nahrungsmittelkonzentrat 5 - 85 Gew.-% und am meisten bevorzugt 20 - 80 Gew.-% Bindemittel. Das Bindemittel kann eine Mischung aus mehreren Bindemitteln sein. Bevorzugte Bindemittel sind Stärke(n), Mehl(e), Hydrokolloid(e), Guarkernmehl, Pektin(e), Stärkehydrolysat(e) oder Mischungen daraus.

Das erfindungsgemäße Nahrungsmittelkonzentrat ist fettarm, d. h. es enthält weniger als 1 Gew.-% (Gewichtsprozent) Fett, bezogen auf die Gesamtzusammensetzung, wobei der Begriff Fett alle in dem Nahrungsmittelkonzentrat enthaltenen natürlichen, pflanzlichen und tierischen sowie synthetisch hergestellten Öle und Fette umfaßt. Bevorzugt liegt der Fettgehalt unter 0,8 Gew.-%, besonders bevorzugt unter 0,5 Gew.-% und noch weiter bevorzugt unter 0,3 Gew.-%. Das erfindungsgemäße Nahrungsmittelkonzentrat kann auch im wesentlichen fettfrei sein, worunter im Sinne der Erfindung ein Fettgehalt von weniger als 0,2 Gew.-%, bezogen auf die Gesamtzusammensetzung, verstanden wird.

Unter dem Begriff granulär oder in Granulatform wird eine Anhäufung von festen Teilchen (Granulatteilchen, Körner) verstanden, wobei die festen Teilchen im Durchschnitt größer als die Partikel eines Pulvers sind. Unter einem Pulver wird im Sinne der Erfindung eine Anhäufung von Körnern verstanden, die zu mehr als 80 % aus Partikeln mit einer Größe im Bereich von etwa 20 - 600 µm, bevorzugt 50 - 500 µm, besteht. In der Regel liegt die durchschnittliche Teilchengröße eines Granulats oberhalb von 1 mm. Das erfindungsgemäße Nahrungsmittelkonzentrat enthält mehr als 60 Gew.-% Granulatteilchen, bezogen auf das gesamte Nahrungsmittelkonzentrat, bevorzugt mehr als 70 Gew.-%, besonders bevorzugt mehr als 75 Gew.-% Granulatteilchen, die eine Größe von mindestens 1 mm aufweisen. Die Granulatteilchen sind bevorzugt strangförmig ausgebildet, mit einer Länge von 1 - 15 mm und einer maximalen Ausdehnung quer zur Längsrichtung von 1 - 3 mm. Unter einer Strangform wird eine länglich ausgebildete Form verstanden, d.h. eine Form, bei der die Länge größer als die maximale Ausdehnung quer zur Längsrichtung ist. Beispielsweise kann bei einer maximalen Ausdehnung quer zur Längsrichtung von 1 mm die Länge 1,1 - 15 mm betragen und bei einer maximalen Ausdehnung quer zur Längsrichtung von 1 - 2 mm kann die Länge 2,1 - 15 mm betragen. Die Stränge können beispielsweise Zylinder sein, wobei die Querschnittsfläche des Strangs jede beliebige Form aufweisen kann, beispielsweise kann die Querschnittsfläche ein Kreis, ein Dreieck oder ein Viereck sein. Bei einem Strang in Form eines kreisförmigen Zylinders ist die Länge des Strangs die Höhe des Zylinders und die maximale Ausdehnung quer zur Länge ist der Durchmesser des Zylinders. Bei einer quadratischen Querschnittsfläche ist die maximale Ausdehnung quer zur Längsrichtung die Diagonale des Quadrats. Die Stränge können gerade oder gebogen sein. Bevorzugt beträgt die maximale Ausdehnung quer zur Längsrichtung 1 - 2,5 mm, besonders bevorzugt 1 - 2 mm. Die Länge beträgt bevorzugt 1 - 12 mm, besonders bevorzugt 2 - 10 mm und noch weiter bevorzugt 3 - 10 mm.

Das erfindungsgemäße Nahrungsmittelkonzentrat ist gut hydratisierbar (Instanteigenschaften). Es bildet bei der Zugabe von Wasser in der Regel innerhalb von 60 Sekunden, bevorzugt innerhalb von 30 Sekunden, besonders bevorzugt innerhalb von 15 Sekunden, eine im wesentlichen klumpenfreie Mischung aus, beispielsweise eine gebundene Suppe oder eine Sauce. Unter dem Begriff klumpenfrei wird im Sinne der Erfindung verstanden, daß keine mit bloßem Auge wahrnehmbaren Klumpen in der durch Wasserzugabe erzeugten Mischung (Nahrungsmittelprodukt), insbesondere einer gebundenen Suppe oder einer Sauce, enthalten sind. Die Instanteigenschaften des erfindungsgemäßen Nahrungsmittelkonzentrats werden unter anderem auf die poröse Struktur des Nahrungsmittelkonzentrats zurückgeführt, wodurch das Produkt eine geringe Schüttdichte hat. Die Schüttdichte liegt im Bereich von 300 - 550 g/l (Gramm pro Liter), bevorzugt im Bereich von 320 - 530 g/l und besonders bevorzugt im Bereich von 340 - 500 g/l.

Das erfindungsgemäße granuläre Nahrungsmittelkonzentrat ist schüttbar (rieselfähig). Gegenüber Agglomeraten des Standes der Technik weist es ferner den Vorteil auf, daß es weniger staubt, wodurch die Weiterverarbeitung und die Abfüllung erleichtert werden.

Der Wassergehalt des erfindungsgemäßen Nahrungsmittelkonzentrats beträgt zweckmäßigerweise weniger als 12 Gew.-%, bezogen auf die Gesamtzusammensetzung, bevorzugt weniger als 10 Gew.-%, besonders bevorzugt weniger als 8 Gew.-% und noch weiter bevorzugt weniger als 5 Gew.-%.

Das erfindungsgemäße granuläre Nahrungsmittelkonzentrat umfaßt bevorzugt Pulverpartikel, die aneinander haften und Zwischenräume ausbilden, wobei das Material zwischen den Pulverpartikeln (Zwischenräume) keinen höheren Fettanteil als das Nahrungsmittelkonzentrat aufweist. Bevorzugt enthält das Material in den Zwischenräumen weniger als 0,5 Gew.-% Fett, besonders bevorzugt weniger als 0,3 Gew.-% und noch weiter bevorzugt weniger als 0,1 Gew.-% Fett, bezogen auf die Masse des Zwischenraummaterials.

Zusätzlich zu dem Bindemittel kann das erfindungsgemäße Nahrungsmittelkonzentrat die folgenden Komponenten einzeln oder als Mischung umfassen:
- bis zu 60 Gew.-% Zucker, Zuckerarten, beispielsweise Saccharose oder Laktose,
- bis zu 60 Gew.-% Oligo- und/oder Polysaccharide, beispielsweise Inulin, Oligofructose oder Polydextrose,
- bis zu 60 Gew.-% Zuckeraustauschstoffe, Polyole, beispielsweise Sorbit, Maltit oder Mannit,
- bis zu 60 Gew.-% Salz (NaCl),
- bis zu 60 Gew.-% würzende und/oder geschmacksgebende Substanzen, beispielsweise Salze, Aromen, Lebensmittelextrakte, Kräuter, Gewürze, Geschmacksverstärker, Zusatzstoffe, z.B. Genußsäuren,
- bis zu 90 Gew.-% Gemüse, beispielsweise Karotte, Sellerie, Zwiebel,
- bis zu 60 Gew.-% Protein, Proteinderivate, beispielsweise Gelatine, Milcheiweiß, Molkereiweiß und/oder
- bis zu 15 Gew.-% färbende Bestandteile, beispielsweise Farbstoffe oder färbende Pflanzenauszüge.

Bevorzugt enthält das erfindungsgemäße Nahrungsmittelkonzentrat zusätzlich zu dem Bindemittel bis zu 50 Gew.-% Salz, besonders bevorzugt bis zu 40 Gew.-% Salz, und noch weiter bevorzugt bis zu 30 Gew.-% Salz und/oder bis zu 50 Gew.-%, besonders bevorzugt bis zu 30 Gew.-% würzende und/oder geschmacksgebende Substanzen.

Das erfindungsgemäße Verfahren zur Herstellung eines granulären Nahrungsmittelkonzentrats umfaßt die Schritte
a) Mischen eines pulverförmigen Nahrungsmittelkonzentrats, das ein Bindemittel umfaßt und weniger als 1 Gew.-% Fett enthält, mit Wasser oder einer wäßrigen Zusammensetzung, wobei das Wasser oder die wäßrige Zusammensetzung 2-20 Gew.-% des pulverförmigen Nahrungsmittelkonzentrats ausmacht,
b) Extrudieren der Mischung,
c) Bilden von Granulatteilchen aus dem Extrudat und
d) Trocknen der Ganulatteilchen zu einem schüttbaren granulären Nahrungsmittelkonzentrat.

Das pulverförmige Nahrungsmittelkonzentrat kann mit dem Fachmann bekannten Verfahren hergestellt werden, beispielsweise durch einen Misch- oder Mahlpozeß. Üblicherweise weist das pulverförmige Nahrungsmittelkonzentrat einen Wassergehalt von 1 - 18 Gew.-% auf, d.h. der Wasseranteil beträgt 1-18 Gew.-%, bezogen auf das gesamte pulverförmige Nahrungsmittelkonzentrat. Der Wasseranteil beträgt bevorzugt bei 2 - 14 Gew.-%, besonders bevorzugt 3-12 Gew.-%.

Im Mischschritt a) werden 2-20 Gew.-%, bezogen auf das gesamte pulverförmige Nahrungsmittelkonzentrat, Wasser oder die wäßrige Zusammensetzung mit dem pulverförmigen Nahrungsmittelkonzentrat gemischt, wobei das Wasser oder die wäßrige Zusammensetzung auf die Pulverpartikel des Nahrungsmittelkonzentrats aufgebracht wird, die Oberfläche der Pulverpartikel benetzt und das Wasser oder die wäßrige Zusammensetzung in die Pulverpartikel eindringt. Bevorzugt beträgt die Menge des im Mischschritt a) eingesetzten Wassers oder der eingesetzten wäßrigen Zusammensetzung 2 - 18 Gew.-%, besonders bevorzugt 3 - 15 Gew.-% und noch weiter bevorzugt 4 - 12 Gew.-%, bezogen auf das pulverförmige Nahrungsmittelkonzentrat.

Um die spätere gute Rehydratisierbarkeit des erfindungsgemäßen Nahrungsmittelkonzentrats zu gewährleisten, soll das Wasser oder die wäßrige Lösung die Pulverpartikel nicht vollständig durchfeuchten, d.h. die Pulverpartikel nicht vollständig durchdringen, sondern nur in den oberflächennahen Bereich eindringen. Ein Durchfeuchten der Pulverpartikel des Nahrungsmittelkonzentrats kann zur Folge haben, daß das Nahrungsmittelkonzentrat in dem anschließenden Extrusionsschritt b) (Granulierschritt) zu stark verdichtet wird und dann keine ausreichende Porosität für eine schnelle und klumpenfreie spätere Rehydratation des Endproduktes mehr besteht. Ferner wäre der Trocknungsaufwand ungleich höher, da tief eingedrungenes Wasser schwieriger auszutreiben ist. Durch das Befeuchten oder Anfeuchten der Pulverpartikel kommt es zum Anlösen der Partikeloberflächen, wodurch die Pulverpartikel im anschließenden Extrusionsschritt b) aneinander haften können. Die angelöste Partikeloberfläche stellt somit auch ein Bindemittel bereit.

Wenn im Mischschritt a) eine wäßrige Zusammensetzung eingesetzt wird, umfaßt die wäßrige Zusammensetzung bevorzugt einen Haftvermittler, der ein oben erläutertes Bindemittel oder auch ein Zucker oder Gelatine sein kann. Bevorzugte Haftvermittler sind Stärke(n), Mehl(e), Hydrokolloid(e), Gummi Arabicum, Pektin(e), Stärkehydrolysat(e), Saccharose, Laktose oder Mischungen daraus. Die wäßrige Zusammensetzung kann in Form einer wäßrigen Lösung oder einer wäßrigen Suspension vorliegen. Der Haftvermittler in der wäßrigen Zusammensetzung vermittelt ab dem Extrusionsschritt b) die Haftung der Pulverpartikel des Nahrungsmittelkonzentrats.

Der wäßrigen Zusammensetzung wird bevorzugt kein Fett zugesetzt, so daß sie lediglich ein Restfett aus dem gegebenenfalls in der wäßrigen Zusammensetzung enthaltenen Bindemittel enthalten kann. Bevorzugt liegt der Fettgehalt der wäßrigen Zusammensetzung unter 0,3 Gew.-%, besonders bevorzugt unter 0,1 Gew.-%, bezogen auf die gesamte wäßrige Zusammensetzung. Aufgrund des niedrigen Fettgehalts der im Schritt a) eingesetzten wäßrigen Zusammensetzung und des niedrigen Fettgehalts des eingesetzten pulverförmigen Nahrungsmittelkonzentrats wird die Haftung zwischen den Pulverpartikeln nicht über Fettbrücken vermittelt, sondern über Kohlenhydrat- bzw. Zuckerbrücken, Proteinbrücken und/oder Salzbrücken.

Zur Verbesserung der Benetzungseigenschaften kann dem Wasser oder der wäßrigen Zusammensetzung ein Emulgator zugesetzt werden, beispielsweise Lecithin. In der wäßrigen Zusammensetzung kann der Emulgator alternativ oder zusätzlich zu dem Bindemittel enthalten sein.

Das nicht vollständige Durchfeuchten bzw. die geringe Eindringtiefe des Wassers oder der wäßrigen Zusammensetzung in die Pulverpartikel wird dadurch erreicht, daß im Mischschritt a) die oben angegebenen Mengen an Wasser oder wäßriger Zusammensetzung eingesetzt werden. Zusätzlich kann dem Wasser oder der wäßrigen Zusammensetzung in diesem Schritt nicht ausreichend Zeit gegeben werden, um weiter in die Pulverpartikel einzudringen.

Im zuletzt genannten Fall, daß dem Wasser oder der wäßrigen Lösung zusätzlich nicht ausreichend Zeit gegeben wird, um die Pulverpartikel weiter zu durchdringen, beträgt die Einwirkzeit im Mischschritt üblicherweise weniger als 5 Minuten, bevorzugt weniger als 2 Minuten, besonders bevorzugt weniger als 1 Minute und noch weiter bevorzugt weniger als 30 Sekunden.

Bei einer diskontinuierlichen oder halbkontinuierlichen Verfahrensführung, bei der der Mischschritt diskontinuierlich, d.h. batchweise erfolgt, beispielsweise durch Vermischen von pulverförmigem Nahrungsmittelkonzentrat und Wasser oder wäßriger Zusammensetzung in einem Kessel, beträgt die zeitliche Untergrenze für den Mischschritt in der Regel 20 Sekunden, da eine schnellere Verfahrensführung apparativ nicht möglich ist. Die Einwirkzeit des Wassers oder der wäßrigen Lösung in einem diskontinuierlich durchgeführten Mischschritt beträgt daher üblicherweise 20 Sekunden bis 5 Minuten, bevorzugt 30 Sekunden bis 3 Minuten. Mit Hilfe einer kontinuierlichen Verfahrensführung, beispielsweise dem Aufsprühen des Wassers oder der wäßrigen Zusammensetzung auf die Pulverpartikel des Nahrungsmittelkonzentrats kann die Einwirkzeit im Mischschritt gegenüber der diskontinuierlichen Verfahrensführung deutlich kürzer gehalten werden. Üblicherweise läßt man das Wasser oder die wäßrige Zusammensetzung auf die Pulverpartikel des Nahrungsmittelkonzentrats in diesem Fall im Mischschritt weniger als 1 Minute einwirken, bevorzugt weniger als 30 Sekunden, besonders bevorzugt weniger als 20 Sekunden und noch weiter bevorzugt weniger als 10 Sekunden.

Die oben angegebenen, längeren Einwirkzeiten sind insbesondere dann geeignet, wenn als wäßrige Zusammensetzung im Mischschritt a) hochkonzentrierte Lösungen eingesetzt werden, da diese mit geringerer Geschwindigkeit in die Pulverpartikel eindringen als es bei niedriger konzentrierten Lösungen oder Wasser der Fall ist.

Im Extrusionsschritt b) wird die angefeuchtete Mischung unter Druck durch eine Lochplatte, ein Gitter oder eine Düsenanordnung gepreßt und die Mischung so zu Strängen ausgeformt. Die Lochplatte kann ein oder mehrere Löcher (Aussparungen) aufweisen. Bevorzugt weist die Lochplatte eine Vielzahl von Aussparungen auf. Die Umfangsgestalt und die Anzahl der gebildeten Stränge läßt sich über die Form und die Anzahl der Aussparungen variieren. Bevorzugt sind die Aussparungen kreisförmig, oval oder viereckig.

Um eine gute Rehydratisierbarkeit des später getrockneten granulären Nahrungsmittelkonzentrats zu gewährleisten, sollte eine zu starke Verdichtung während des Extrusionsschritts b) vermieden werden. Die Verdichtung wird durch einen höheren Wasseranteil und einen höheren Druck gefördert. Ein vollständig durchfeuchtetes pulverförmiges Nahrungsmittelkonzentrat ist selbst bei einer Extrusion unter niedrigem Druck in der Regel bereits zu stark verdichtet, als daß noch eine gute Rehydratisierbarkeit erreichbar wäre. Die Extrusionsgeschwindigkeit, d.h. die Geschwindigkeit, mit der die Stränge extrudiert werden, beispielsweise aus der Lochplatte austreten, korreliert mit dem Druck und beträgt bevorzugt bis zu 30 cm/s, besonders bevorzugt 3 - 30 cm/s, noch weiter bevorzugt 5 - 20 cm/s und am meisten bevorzugt 6-18 cm/s.

Durch die Anwendung von niedrigen Drücken im Extrusionsschritt b) erfolgt eine nur geringe Verdichtung des Nahrungsmittelkonzentrats und das Produkt ist aufgrund seiner lockeren Struktur gut rehydratisierbar. Die geringe Verdichtung bewirkt, daß das erfindungsgemäße Nahrungsmittelkonzentrat insbesondere im Inneren eine hohe Porosität aufweist, d.h. insbesondere im Inneren relativ grobporig ist, wodurch das Wasser bei der späteren Anwendung zur Herstellung eines Nahrungsmittelprodukts, beispielsweise einer gebundenen Suppe, besser in das erfindungsgemäße Nahrungsmittelkonzentrat eindringen kann.

Der Extrusionsschritt b) kann mit dem Fachmann bekannten Granulatoren, Feuchtgranulatoren oder Niederdruckextrusionsvorrichtungen durchgeführt werden.

Im erfindungsgemäßen Verfahren wird zu dem im pulverförmigen Ausgangsmaterial enthaltenen Fett bevorzugt kein zusätzliches Fett zugesetzt. Dadurch wird vermieden, daß die Haftung zwischen den Pulverpartikeln vornehmlich durch Fette vermittelt wird. Bevorzugt wird die Haftung zwischen den Pulverpartikeln im erfindungsgemäßen Nahrungsmittelkonzentrat im wesentlichen durch Kohlenhydrat-, Zucker-, Protein- und/oder Salzbrücken verursacht. Eine Folge dessen ist die gute Rehydratisierbarkeit in kaltem Wasser, bevorzugt in Wasser mit einer Temperatur von 18 - 28°C, die bei Granulatteilchen oder Agglomeraten, deren Haftvermittlung durch Fette bereitgestellt wird, nicht gegeben ist, da die Fettbrücken in kaltem Wasser nicht aufbrechen. Bevorzugt lassen sich bis zu 500 g des granulären Nahrungsmittelkonzentrats in 11 Wasser mit einer Temperatur von 20°C, bevorzugt ohne oder mit wenig Rühren, innerhalb von 60 Sekunden, bevorzugt innerhalb von 30 Sekunden, besonders bevorzugt innerhalb von 15 Sekunden, klumpenfrei dispergieren.

Die Bildung von Granulatteilchen aus dem Extrudat im Schritt c) kann den Schritt umfassen, daß die extrudierten Stränge infolge ihrer lockeren Struktur durch ihr Eigengewicht abbrechen, wobei in der Regel Granulatteilchen mit einer Länge im Bereich von etwa 1 - 15 mm entstehen. Die Bildung der Granulatteilchen kann auch durch ein Rotieren der Lochplatte oder des Gitters im Extrusionsschritt unterstützt werden, wobei die Rotationsbewegung die Bildung der Granulatteilchen aus dem Extrudat fördert. Ebenso können andere mechanische Einwirkungen vorgesehen werden, um aus dem Extrudat Granulatteilchen zu bilden, beispielsweise ein Schneiden.

Im Anschluß an die Bildung der Granulatteilchen im Schritt c) werden die Granulatteilchen mit dem Fachmann bekannten Trocknungsverfahren getrocknet. Beispielsweise sind Lufttrocknungen, Trocknungen unter vermindertem Druck (Vakuumtrocknungen) oder Trocknungen unter Erwärmen möglich. Der Wassergehalt des getrockneten Produkts beträgt zweckmäßigerweise weniger als 12 Gew.-%, bezogen auf die Gesamtzusammensetzung, bevorzugt weniger als 10 Gew.-%, besonders bevorzugt weniger als 8 Gew.-% und noch weiter bevorzugt weniger als 5 Gew.-%.

In einem weiteren Aspekt bezieht sich die Erfindung auf ein granuläres Nahrungsmittelkonzentrat, das nach dem erfindungsgemäßen Verfahren erhältlich ist.

Weiter bezieht sich die Erfindung auf die Verwendung des Nahrungsmittelkonzentrats zur Herstellung eines Nahrungsmittelprodukts, insbesondere eines viskosen Nahrungsmittelprodukts, beispielsweise einer gebundenen Suppe oder einer Sauce. Die Sauce kann eine Sauce für ein Fertiggericht sein, beispielsweise eine Pastasauce, oder eine Sauce für ein Fixgericht, beispielsweise Fix für Gulasch oder Fix für Kartoffelgratin. Zur Herstellung des Nahrungsmittelprodukts wird eine Flüssigkeit, bevorzugt Wasser und/oder Milch, mit dem granulären Nahrungsmittelkonzentrat der Erfindung gemischt und es entsteht ein nahezu oder vollständig klumpenfreies Nahrungsmittelprodukt, bevorzugt ohne oder mit wenig Rühren und bevorzugt mit einer Viskosität von 1000 - 5000 Centipoise. Es ist eine gute Rehydratisierbarkeit sowohl bei der Heißanwendung als auch bei der Kaltanwendung gegeben. Während bei der Heißanwendung bevorzugt Wasser mit einer Temperatur von etwa 60 - 100°C eingesetzt wird, verwendet man bei der Kaltanwendung bevorzugt Wasser mit einer Temperatur von etwa 5 - 30°C.

Wie oben erläutert, erzeugt das oder die Bindemittel bei der Zugabe von Wasser zu dem granulären Nahrungsmittelkonzentrat die gewünschte Viskosität. Durch die Zugabe von Wasser und/oder Milch ist innerhalb von etwa 120 Sekunden, bevorzugt innerhalb von 60 Sekunden, besonders bevorzugt innerhalb von 30 Sekunden, das fertige Nahrungsmittelprodukt, beispielsweise eine gebundene Suppe oder Sauce, in Form einer Flüssigkeit erhältlich, die eine Viskosität im Bereich von 1000 - 5000 Centipoise aufweist.

Eine Nahrungsmittelzusammensetzung kann das erfindungsgemäße granuläre Nahrungsmittelkonzentrat umfassen. Die Nahrungsmittelzusammensetzung kann weitere Nahrungsmittelkomponenten enthalten, beispielsweise Gemüse, Fleischstücke, Pilze oder ähnliches.

Das nachfolgende Beispiel erläutert die Erfindung.

### Bratensauce

### Zusammensetzung:

| | |
|---|---|
| Stärke | 32 % |
| Maltodextrin | 21 % |
| Salz | 14 % |
| Mehl | 11 % |
| Aroma/Extrakte | 9 % |
| Geschmacksverstärker | 5,5 % |
| Gemüse (Sellerie, Karotte, Zwiebel) | 3 % |
| Couleur | 2,5 % |
| Gewürze | 2 % |

Eine pulverförmige Mischung mit der oben angegebenen Zusammensetzung wurde einem Fließbett zugeführt und beim Durchlaufen (Verweilzeit ca. 15 Sekunden) mit Wasser besprüht (Dosierung 7 Gew.-% Wasser, bezogen auf die gesamte pulverförmige Mischung). Im Anschluß wurde das befeuchtete Gut durch eine Lochplatte mit kreisförmigen Aussparungen gedrückt (Extrusionsschritt). Es resultieren Granulatteilchen mit einem Durchmesser von etwa 1,5 mm und einer Länge zwischen 1,5 und 10 mm. Anschließend wurde das Granulat auf eine Endfeuchte von unterhalb 5 Gew.-% getrocknet. Das Produkt wird in kochendes Wasser gegeben und bildet dabei eine klumpenfreie Bratensauce aus. Das Dispergieren des Produkts in kaltem Wasser und anschließendes Erhitzen liefert ebenfalls eine klumpenfreie Bratensauce.

## Patentansprüche

1. Granuläres Nahrungsmittelkonzentrat, **dadurch gekennzeichnet, daß** das Nahrungsmittelkonzentrat ein Bindemittel enthält, weniger als 1 Gew.% Fett umfaßt und mehr als 60 Gew.-% Granulatteilchen enthält, die eine Größe von mindestens 1 mm aufweisen, wobei das granuläre Nahrungsmittelkonzentrat schüttbar ist und eine Schüttdichte von 300 - 550 g/l aufweist.

2. Nahrungsmittelkonzentrat nach Anspruch 1, **dadurch gekennzeichnet, daß** das Nahrungsmittelkonzentrat eine Schüttdichte von 340 - 500 g/l aufweist.

3. Nahrungsmittelkonzentrat nach Anspruch 1 oder 2, **dadurch gekennzeichnet, daß** das Nahrungsmittelkonzentrat 5 - 85 Gew.-% Bindemittel enthält.

4. Nahrungsmittelkonzentrat nach einem der Ansprüche 1 bis 3, **dadurch gekennzeichnet, daß** das Nahrungsmittelskonzentrat weniger als 0,5 Gew.% Fett enthält.

5. Nahrungsmittelkonzentrat nach einem der Ansprüche 1 bis 4, **dadurch gekennzeichnet, daß** das Nahrungsmittelkonzentrat weniger als 8 Gew.-% Wasser enthält.

6. Nahrungsmittelkonzentrat nach einem der Ansprüche 1 bis 5, **dadurch gekennzeichnet, daß** die Granulatteilchen strangförmig ausgebildet sind und eine Länge von 2,1 - 15 mm sowie eine maximale Ausdehnung quer zur Längsrichtung von 1 - 2 mm aufweisen.

7. Nahrungsmittelkonzentrat nach einem der Ansprüche 1 bis 6, **dadurch gekennzeichnet, daß** die Granulatteilchen aneinander haftende Pulverpartikel umfassen, die Zwischenräume ausbilden, und das Material in den Zwischenräumen keinen höheren Fettanteil als das Nahrungsmittelkonzentrat aufweist.

8. Nahrungsmittelkonzentrat nach einem der Ansprüche 1 bis 7, **dadurch gekennzeichnet, daß** bis zu 500 g des Nahrungsmittelkonzentrats in 1 I Wasser mit einer Temperatur von 20°C innerhalb von 60 Sekunden klumpenfrei dispergierbar sind.

9. Verfahren zur Herstellung eines Nahrungsmittelkonzentrats nach einem der Ansprüche 1 bis 8, **dadurch gekennzeichnet, daß** das Verfahren die folgenden Schritte umfaßt:
a) Mischen eines pulverförmigen Nahrungsmittelkonzentrats, das ein Bindemittel umfaßt und weniger als 1 Gew.-% Fett enthält, mit Wasser oder einer wäßrigen Zusammensetzung, wobei das Wasser oder die wäßrige Zusammensetzung 2-20 Gew.-% des pulverförmigen Nahrungsmittelkonzentrats ausmacht,
b) Extrudieren der Mischung,
c) Bilden von Granulatteilchen aus dem Extrudat und
d) Trocknen der Ganulatteilchen zu einem schüttbaren granulären Nahrungsmittelkonzentrat.

10. Verfahren nach Anspruch 9, **dadurch gekennzeichnet, daß** die Mischung mit einer Geschwindigkeit von bis zu 30 cm/s extrudiert wird.

11. Verfahren nach Anspruch 9 oder 10, **dadurch gekennzeichnet, daß** das Wasser oder die wäßrige Zusammensetzung im Schritt a) 2 - 18 Gew.-% des pulverförmigen Nahrungsmittelkonzentrats ausmacht.

12. Verfahren nach einem der Ansprüche 9 bis 11, **dadurch gekennzeichnet, daß** das Wasser oder die wäßrige Zusammensetzung im Schritt a) 4 - 12 Gew.-% des pulverförmigen Nahrungsmittelkonzentrats ausmacht.

13. Verfahren nach einem der Ansprüche 9 bis 12, **dadurch gekennzeichnet, daß** im Schritt a) eine wäßrige Zusammensetzung eingesetzt wird, die einen Haftvermittler enthält.

14. Verwendung eines Nahrungsmittelkonzentrat nach einem der Ansprüche 1 bis 8 zur Herstellung eines Nahrungsmittelprodukts.

15. Verwendung nach Anspruch 14, **dadurch gekennzeichnet, daß** das Nahrungsmittelprodukt eine gebundene Suppe oder eine Sauce ist.

## Claims

1. Granular food concentrate, **characterized in that** the food concentrate comprises a binder, less than 1 wt.-% fat and more than 60 wt.-% granulate particles which are at least 1 mm in size, wherein the granular food concentrate is pourable and has a bulk density of 300 - 550 g/l.

2. Food concentrate according to claim 1, **characterized in that** the food concentrate has a bulk density of 340 - 500 g/l.

3. Food concentrate according to claim 1 or 2, **characterized in that** the food concentrate contains 5 - 85 wt.-% binder.

4. Food concentrate according to one of claims 1 to 3, **characterized in that** the food concentrate contains less than 0.5 wt.-% fat.

5. Food concentrate according to one of claims 1 to 4, **characterized in that** the food concentrate contains less than 8 wt.-% water.

6. Food concentrate according to one of claims 1 to 5, **characterized in that** the granulate particles are formed as strands and are 2.1 - 15 mm long, and have a maximum extension transverse to the longitudinal direction of 1 - 2 mm.

7. Food concentrate according to one of claims 1 to 6, **characterized in that** the granulate particles comprise powder particles which adhere to one another, which form interstices, and the material in the interstices does not contain more fat than the food concentrate.

8. Food concentrate according to one of claims 1 to 7, **characterized in that** up to 500 g of the food concentrate can be dispersed lump-free within 60 seconds in 1 l water with a temperature of 20°C.

9. Method for producing a food concentrate according to one of claims 1 to 8, **characterized in that** the method comprises the following steps:
a) mixing a powdery food concentrate which comprises a binder and contains less than 1 wt.-% fat with water or an aqueous composition, wherein the water or the aqueous composition constitutes 2-20 wt.-% of the powdery food concentrate,
b) extruding the mixture,
c) forming granulate particles from the extrudate and
d) drying the granulate particles to form a pourable granular food concentrate.

10. Method according to claim 9, **characterized in that** the mixture is extruded at a rate of up to 30 cm/s.

11. Method according to claim 9 or 10, **characterized in that** the water or the aqueous composition in step a) constitutes 2 - 18 wt.-% of the powdery food concentrate.

12. Method according to one of claims 9 to 11, **characterized in that** the water or the aqueous composition in step a) constitutes 4 - 12 wt.-% of the powdery food concentrate.

13. Method according to one of claims 9 to 12, **characterized in that** in step a) an aqueous composition is used which contains an adhesion promoter.

14. Use of a food concentrate according to one of claims 1 to 8 for producing a food product.

15. Use according to claim 14, **characterized in that** the food product is a thickened soup or a sauce.

## Revendications

1. Concentré alimentaire granulé, **caractérisé en ce que** le concentré alimentaire comprend un liant, comprend moins de 1 % en poids de graisse et plus de 60 % en poids de particules de granulé qui présentent une taille d'au moins 1 mm, sachant que le concentré alimentaire granulé peut être manipulé en vrac et présente une masse volumique en vrac de 300 à 550 g/l.

2. Concentré alimentaire selon la revendication 1, **caractérisé en ce que** le concentré alimentaire présente une masse volumique en vrac de 340 à 500 g/l.

3. Concentré alimentaire selon la revendication 1 ou 2, **caractérisé en ce que** le concentré alimentaire comprend 5 à 85 % en poids de liant.

4. Concentré alimentaire selon l'une quelconque des revendications 1 à 3, **caractérisé en ce que** le concentré alimentaire comprend moins de 0,5 % en poids de graisse.

5. Concentré alimentaire selon l'une quelconque des revendications 1 à 4, **caractérisé en ce que** le concentré alimentaire comprend moins de 8 % en poids d'eau.

6. Concentré alimentaire selon l'une quelconque des revendications 1 à 5, **caractérisé en ce que** les particules de granulé sont configurées en forme de boyau et présentent une longueur de 2,1 à 15 mm ainsi qu'une extension maximale transversale par rapport à la direction longitudinale de 1 à 2 mm.

7. Concentré alimentaire selon l'une quelconque des revendications 1 à 6, **caractérisé en ce que** les particules de granulé comprennent des particules de poudre adhérant les unes aux autres, qui forment des espaces intermédiaires, et **en ce que** le matériau dans les espaces intermédiaires ne présente pas une part de graisse plus élevée que le concentré alimentaire.

8. Concentré alimentaire selon l'une quelconque des revendications 1 à 7, **caractérisé en ce que** jusqu'à 500 g du concentré alimentaire sont dispersés sans grumeaux dans 1 1 d'eau à une température de 20 °C en l'espace de 60 secondes.

9. Procédé pour la préparation d'un concentré alimentaire selon l'une quelconque des revendications 1 à 8, **caractérisé en ce que** le procédé comprend les étapes suivantes :
a) mélangeage d'un concentré alimentaire pulvérulent qui comprend un liant et moins de 1 % en poids de graisse à de l'eau ou à une composition aqueuse, sachant que l'eau ou la composition aqueuse représentent 2 à 20 % en poids du concentré alimentaire pulvérulent,
b) extrusion du mélange,
c) formation de particules de granulé à partir de l'extrudat et
d) séchage des particules de granulé pour donner un concentré alimentaire granulé pouvant être manipulé en vrac.

10. Procédé selon la revendication 9, **caractérisé en ce que** le mélange est extrudé à une vitesse allant jusqu'à 30 cm/ s.

11. Procédé selon la revendication 9 ou 10, **caractérisé en ce que** l'eau ou la composition aqueuse dans l'étape a) représente 2 à 18 % en poids du concentré alimentaire pulvérulent.

12. Procédé selon l'une quelconque des revendications 9 à 11, **caractérisé en ce que** l'eau ou la composition aqueuse dans l'étape a) représente 4 à 12 % en poids du concentré alimentaire pulvérulent.

13. Procédé selon l'une quelconque des revendications 9 à 12, **caractérisé en ce que** dans l'étape a), on utilise une composition aqueuse qui contient un agent d'adhérence.

14. Utilisation d'un concentré alimentaire selon l'une quelconque des revendications 1 à 8 à la préparation d'un produit alimentaire.

15. Utilisation selon la revendication 14, **caractérisée en ce que** le produit alimentaire est une soupe liée ou une sauce.
